# EUROPEAN PATENT APPLICATION

(11) **EP 2 913 833 A1**
(43) Date of publication of application: **02.09.2015**
(21) Application number: 14156820.4
(22) Date of filing: 26.02.2014
(51) Int. Cl.: H01G 11/62, H01G 11/64, H01M 10/0567, H01M 10/0568

(54) **An electrolyte composition for hybrid capacitor and hybrid capacitor comprising the same**

(71) Applicant: Solvay SA, 1120 Bruxelles (BE)
(72) Inventor: Lee, Ji-hun, Mapo-Gu, Seoul (KR)
(74) Representative: Mross, Stefan P.M.

(57) **Abstract**

Disclosed is an electrolyte composition, suitable for hybrid capacitor, especially lithium ion capacitor, and a hybrid capacitor comprising the same.

## Description

### TECHNICAL FIELD

The present invention relates to an electrolyte composition suitable for hybrid capacitor, especially lithium ion capacitor, and a hybrid capacitor comprising the same.

### BACKGROUND OF THE INVENTION

A hybrid capacitor is an electrochemical energy storage device that employs two different electrode types, the difference between the electrodes generally being in capacity or composition. Most commonly, one electrode is a redox (faradaic) electrode and the other is a double-layer (non-faradaic) electrode. Representative example of the hybrid capacitor is a lithium ion capacitor.

A hybrid capacitor has at least a larger capacitance electrode and a smaller capacitance electrode (asymmetric electrodes), with an electrolyte therebetween. The larger capacitance electrode has a larger absolute capacitance than the smaller capacitance electrode. The capacitor thus has an overall capacitance which is approximately the absolute capacitance of the smaller capacitance electrode. The electrodes are made of different materials, with the larger capacitance electrode made of material having a larger specific capacitance. The larger capacitance electrode may thus be the same physical size as or smaller than the smaller capacitance electrode.

Compared to batteries as electrical energy storage system, hybrid capacitors, such as lithium ion capacitor, have a higher power density, i.e. the amount of energy per mass unit which can be stored is lower than that with e.g. secondary batteries, and can be discharged and recharged very quickly thus providing a high power density which is advantageously required in certain applications, such as in devices for the starting of various engines, in particular in motor-vehicle industry. To quickly provide high power, hybrid capacitors are often exposed to high voltage operation. The modification in electrolyte system can increase energy density, power density and/or cycle life, especially under such high voltage operation

The optimization of the electrolyte systems in hybrid capacitor, especially in lithium ion capacitor, still offers a significant potential to improve the performances of such capacitors.

### DESCRIPTION OF THE INVENTION

An object of the present invention is to provide an electrolyte composition which can be advantageously applied in hybrid capacitor, in particular lithium ion capacitor. Another object is to provide certain compounds as suitable component to be contained in the electrolyte composition for hybrid capacitor, particularly lithium ion capacitor.

The present invention therefore relates to a hybrid capacitor, comprising at least a cathode, an anode, and an electrolyte composition, wherein the electrolyte composition comprises at least one compound comprising fluorophosphates.

It has been found that the electrolyte composition containing particular fluorophosphate compound can show advantageous characteristics when used in hybrid capacitor, especially in lithium ion capacitor. In particular, the hybrid capacitor comprising the electrolyte system of the present invention can enjoy high energy density, power density and/or cycle life.

In the present invention, "hybrid capacitor" is intended to denote in particular capacitors with asymmetric electrodes, one of which mainly exhibits electrostatic and the other mostly electrochemical capacitance. In the present invention, "lithium ion capacitor" is one example of the hybrid capacitor, and is intended to denote in particular capacitors which combine the intercalation mechanism of a lithium ion battery with an electrostatic capacitor mechanism.

In the present invention, the compound comprising fluorophosphates in the electrolyte composition of the hybrid capacitor can be metal fluorophosphates. Metals of the metal fluorophosphates may be selected from alkali metals, such as sodium, lithium, and potassium, and alkali earth metals, such as magnesium, and calcium. Examples of the metal fluorophosphates include sodium monofluorophosphate (Na₂PO₃F), sodium difluorophosphate (NaPO₂F₂), lithium monofluorophosphate (Li₂PO₃F), lithium difluorophosphate (LiPO₂F₂), and mixtures thereof. Preferred metal fluorophosphates in the present invention is lithium fluorophosphates.

Particularly preferred compound comprising fluorophosphates in the present invention is lithium difluorophosphate (LiPO₂F₂). Without wishing to be bound by any theory, it is believed that LiPO₂F₂ can function as an excellent component in the electrolyte composition for hybrid capacitor, such as lithium ion capacitor, especially thanks to its excellent thermal stability which is strongly required under the high-voltage operation of such capacitor.

Further, when the electrolyte composition includes at least one conducting salt and/or additive containing halogen atoms, in particular fluorine atoms, the conducting salt and/or additive may be decomposed to form hydrogen halides, such as hydrofluoric acid (HF), in the electrolyte composition. The formation of HF may cause problematic issues. Without wishing to be bound by any theory, the use of the compound comprising fluorophosphates in the electrolyte composition for hybrid capacitor is believed to relieve or prevent the problematic formation of HF and thus to have an advantage to lead to a good stability of the electrolyte composition.

In the present invention, the concentration of the compound comprising fluorophosphates in the electrolyte composition is preferably at least 0.1 wt %, more preferably at least 0.5 wt %, still more preferably at least 0.8 wt %, relative to the total weight of the electrolyte composition. In the present invention, the concentration of the compound comprising fluorophosphates in the electrolyte composition is preferably up to 2.0 wt %, more preferably up to 1.5 wt %, still more preferably up to 1.2 wt %, relative to the total weight of the electrolyte composition.

In the present invention, the electrolyte composition for the hybrid capacitor may include at least one conducting salt in addition to the compound comprising fluorophosphates. Examples of the conducting salt include those having the general formula MₐA_{b}. M is a metal cation, A is an anion, and a and b are independently an integer. The overall charge of the salt MₐA_{b} is 0. M is preferably selected from Li+ and ammonium cations, such as NR₄+ (in which R is selected from alkyl group), including tetraethyl ammonium cation, tetramethyl ammonium cation, and tetrabutyl ammonium cation. Preferred anions are AsF₆⁻, SbF₆⁻, TaF₆⁻, ClO₄⁻, CH₃SO₃⁻, CF₃SO₃⁻, C₄F₉SO₃⁻, AlO₄⁻, AlCl₄⁻, Cl⁻, I⁻, C(SO₂CF₃)₃⁻, phosphate-based anions, such as PF₆-⁻, PF₃(CF₃)₃⁻, and PF₄(C₂O₄)⁻, borate-based anions, such as BF₄⁻, B(C₂O₄)₂⁻, BF₂(C₂O₄)⁻, B(C₂O₄)(C₃O₄)⁻, (C₂F₅BF₃)⁻, B₁₀Cl₁₀²⁻, B(C₆H₅)₄⁻, and B₁₂F₁₂²⁻, and sulfonylimide-based anions, such as N(CF₃SO₂)₂⁻, N(SO₂F)₂⁻, N(C₂F₅SO₂)₂⁻, and N(i-C₃F₇SO₂)₂⁻. Examples of the conducting salt include LiPF₆, LiBF₄, LiClO₄, LiAsF₆, LiTaF₆, LiAlCl₄, L₁₂B₁₀Cl₁₀, LiCF₃SO₃, Li(CF₃SO₂)₂N, Li(C₂F₅SO₂)₂N, LiB(C₆H₅)₄, LiCH₃SO₃, Li(SO₂CF₃)₃C, LiB(C₂O₄)₂, and any combination thereof, more preferably LiPF₆, LiBF₄, Li(CF₃SO₂)₂N, Li(FSO₂)₂N, LiB(C₂O₄)₂, and any combination thereof. The concentration of the conducting salt in the electrolyte composition is preferably from 0.5 M to 2.5 M, more preferably from 0.65 M to 2 M, still more preferably from 0.8 M to 1.5 M.

The electrolyte composition of the hybrid capacitor according to the present invention may further comprise at least one suitable additive. In one embodiment of the present invention, the electrolyte composition for hybrid capacitor comprises a halogenated organic compound as the additive. The halogenated organic compounds useful as additives are, for example, fluorinated carbonic esters which are selected from the group of fluorinated ethylene carbonates, polyfluorinated dimethyl carbonates, fluorinated ethyl methyl carbonates, and fluorinated diethyl carbonates and other solvents or, preferably, suitable additives in the electrolyte composition. Preferred fluorinated carbonates are monofluoroethylene carbonate, 4,4-difluoro ethylene carbonate, 4,5-difluoro ethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoro ethylene carbonate, 4-(fluoromethyl)-5-fluoro ethylene carbonate, 4-fluoro-4,5-dimethyl ethylene carbonate, 4,5-difluoro-4,5-dimethyl ethylene carbonate, and 4,4-difluoro-5,5-dimethyl ethylene carbonate ; dimethyl carbonate derivatives including fluoromethyl methyl carbonate, difluoromethyl methyl carbonate, trifluoromethyl methyl carbonate, bis(difluoro)methyl carbonate, and bis(trifluoro)methyl carbonate ; ethyl methyl carbonate derivatives including 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate ; and diethyl carbonate derivatives including ethyl (2-fluoroethyl) carbonate, ethyl (2,2-difluoroethyl) carbonate, bis(2-fluoroethyl) carbonate, ethyl (2,2,2-trifluoroethyl) carbonate, 2,2-difluoroethyl 2'-fluoroethyl carbonate, bis(2,2-difluoroethyl) carbonate, 2,2,2-trifluoroethyl 2'-fluoroethyl carbonate, 2,2,2-trifluoroethyl 2',2'-difluoroethyl carbonate, and bis(2,2,2-trifluoroethyl) carbonate, 4-fluoro-4-vinylethylene carbonate, 4-fluoro-5-vinylethylene carbonate, 4,4-difluoro-4-vinylethylene carbonate, 4,5-difluoro-4-vinylethylene carbonate, 4-fluoro-4,5-divinylethylene carbonate, 4,5-difluoro-4,5-divinylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate and 4,5-difluoro-4,5-diphenylethylene carbonate, fluoromethyl phenyl carbonate, 2-fluoroethyl phenyl carbonate, 2,2-difluoroethyl phenyl carbonate and 2,2,2-trifluoroethyl phenyl carbonate, fluoromethyl vinyl carbonate, 2-fluoroethyl vinyl carbonate, 2,2-difluoroethyl vinyl carbonate and 2,2,2-trifluoroethyl vinyl carbonate, fluoromethyl allyl carbonate, 2-fluoroethyl allyl carbonate, 2,2-difluoroethyl allyl carbonate and 2,2,2-trifluoroethyl allyl carbonate. The halogenated organic compound useful as an additive is more preferably fluorinated cyclic carbonates, still more preferably a monofluoroethylene carbonate.

The content of an additive in the electrolyte composition, if any, is preferably 0.1 to 10.0 wt %, more preferably 0.5 to 5.0 wt %, still more preferably 0.5 to 2.0 wt %, relative to the total weight of the electrolyte composition.

In the present invention, the electrolyte composition generally comprises at least one solvent. The solvent of the electrolyte composition for hybrid capacitor preferably includes at least one non-aqueous solvent selected from the group consisting of cyclic carbonates, acyclic carbonates and any combination thereof. Examples of cyclic carbonates include cyclic alkylene carbonates, such as ethylene carbonate, propylene carbonate, vinylidene carbonate and butylene carbonate. Examples of acyclic carbonates include acyclic dialkyl carbonates, such as dimethyl carbonate, methylethyl carbonate and diethyl carbonate. More preferably, the solvent includes at least one organic carbonate selected from the group consisting of acyclic dialkyl carbonates, cyclic alkylene carbonates, and combination thereof, still more preferably from the group consisting of ethylene carbonate, propylene carbonate, and diethyl carbonate. Other suitable solvents can be selected, for example, from lactones, formamides, pyrrolidinones, oxazolidinones, nitroalkanes, N,N-substituted urethanes, sulfolane, dialkyl sulfoxides, dialkyl sulfites, acetates, nitriles, acetamides, glycol ethers, dioxolanes, dialkyloxyethanes, and trifluoroacetamides. Particular examples of the solvents include dimethyl formamide, carboxylic acid amides, for example, N,N-dimethyl acetamide and N,N-diethyl acetamide, acetone, acetonitrile, and any combination thereof.

In a particular embodiment of the present invention, the electrolyte composition comprises at least one solvent selected from the group consisting of ethylene carbonate, propylene carbonate, diethyl carbonate, and any combinations thereof.

The at least one solvent may occupy the rest of content of the electrolyte composition in addition to the compound comprising fluorophosphates described in the above, the conducting salt and the additive. The content of the at least one solvent is preferably 85 to 99 wt %, more preferably 92 to 98.5 wt %, still more preferably 95.5 to 98 wt %, relative to the total weight of the electrolyte composition.

The electrolyte composition of the hybrid capacitor according to the present invention may be a polymer gel type electrolyte. In this instance, the electrolyte composition can comprise at least one polymer to form the polymer gel electrolyte. Such a polymer may be an ion-conductive polymer, a polymer which is not ion-conductive, or combination thereof. Examples of the ion-conductive polymer include polyfluorovinylidene (PVDF), polyvinyl chloride (PVC), polyacrylonitrile (PAN), polymethyl methacrylate (PMMA), and any combination thereof. Examples of the polymer which is not ion-conductive include polyethyleneoxide (PEO), polypropyleneoxide (PPO), and combination thereof.

The hybrid capacitor according to the present invention comprises two different electrodes, i.e. a cathode and an anode, operating according to different electrochemical mechanisms (which is the reason for the term hybrid capacitor). In principle, such hybrid capacitors combine the energy storage principle of a lithium-ion secondary battery and an electric double-layer capacitor.

A capacitive material is characterized by a potential swing during the charge and discharge of the capacitor. The initial output potential difference of a symmetric cell with capacitive electrode (cathode in hybrid capacitor) is 0 V and the potentials diverge linearly during charging of cell. By contrast, the battery-like electrode (anode in hybrid capacitor) is characterized by an almost constant potential during charging and discharging. Thus, in order to get the largest voltage in an asymmetric capacitor, where a capacitive electrode is replaced by a battery-like one, the potential of the selected battery-electrode must be close to the low or high limit of the potential window of the capacitive electrode.

Li-intercalation compounds (Li₄Ti₅O₁₂, WO₂, LiCoO₂, LiMn_{1.2}Ni_{0.5}O₄, etc.) have been proposed for electrodes of hybrid capacitors working in non-aqueous electrolytes, the Li₄Ti₅O₁₂/activated carbon system being one of the most intensively studied systems.

Hybrid capacitors may comprise a graphite anode wherein lithium ions are previously intercalated; the later is combined with a porous carbon cathode, and for both electrodes the fluoropolymers, such as those disclosed in an international PCT publication No. WO 2013/110740 A1, can be used as a binder. Respective systems may comprise a cathode based on activated carbon and a negative electrode based on graphite or hard carbon and have been described in the literature as lithium ion capacitors.

Hybrid capacitors comprising a cathode based on activated carbon and comprising at least 20, preferably at least 50 and most preferably at least 80 wt % activated carbon relative to the total weight of the cathode are preferred.

Furthermore, the anode of hybrid capacitors in accordance with the present invention is preferably based on graphite and comprises at least 20, preferably at least 50 and more preferably at least 80 wt % of graphite relative to the total weight of the anode.

By a so-called pre-doping, i.e. the intercalation of lithium in a graphitic type material prior to the charge/discharge of the capacitor, the potential of the anode can be lowered and the potential window of the cathode can be extended. To achieve this, an additional lithium ion source has to be provided and a lithium foil can be used for this purpose.

Other systems which have been described comprise a cathode based on activated carbon and an anode based on non-graphitizable carbon and again, the fluoropolymers defined hereinbefore may be used as a binder for these electrodes.

While the use of metallic lithium compounds has some benefits in improving energy density and cycle life, it also has some drawbacks, in particular form the view point of safety. In view of this it has been proposed to use suitable electrolyte systems where the intercalated lithium can be taken directly from the electrolyte (Beguin et al., J. Power Source 2008, 177, 643) and the electrode systems described therein for the electrodes of the capacitor can be preferably used in accordance with the present invention in another preferred embodiment.

Generally, the available surface at the electrodes limits the amount of energy which can be stored in a hybrid capacitor and thus it is advantageous to use electrode materials with high surface area.

Other carbon materials, such as graphene and carbon nanotube materials as electrode materials for hybrid capacitor have also been described in the literature and may be used in accordance with another preferred embodiment of the present invention.

Another aspect of the present invention concerns an electrolyte composition for hybrid capacitor, comprising at least one compound comprising fluorophosphates. As to the details of the structure and components of the electrolyte composition in this aspect, reference can be made to the above-provided explanations.

Further aspect of the present invention concerns a use of compound comprising fluorophosphates as a component of an electrolyte composition for a hybrid capacitor. As to the details of the structure and components of the electrolyte composition for a hybrid capacitor in this aspect, reference can be made to the above-provided explanations.

While preferred embodiments of this invention have been shown and described, modifications thereof can be made by one skilled in the art without departing from the spirit or teaching of this invention. The embodiments described herein are exemplary only and are not limiting. Many variations and modifications of systems and methods are possible and are within the scope of the invention. Accordingly, the scope of protection is not limited to the embodiments described herein, but is only limited by the claims that follow, the scope of which shall include all equivalents of the subject matter of the claims.

The following examples will describe the invention in further detail without the intention to limit it.

### Example 1: Preparation of lithium ion capacitor

Cathode is prepared by applying a composition comprising an activated carbon, a conductive additive, and a binder, on an aluminium foil, and treated with a heat drying, producing the cathode.

Anode is prepared from graphite material by coating a copper foil with a slurry containing the active material (graphite), a conductive additive, and a binder, and subsequently treated with a heat drying, producing the anode.

Electrolyte composition comprising LiBF₄ as a conducting salt and further LiPO₂F₂ in a mixed solvent of EC: DEC:PC being 3:4:1 is prepared by mixing the respective components.

A lithium ion capacitor is prepared by first stacking the electrodes, a separator made of porous polyethylene film interposed therebetween, and lithium foil to produce the electrode assembly, inserting the same in a capacitor case (pouch), sealing the case except for a pre-formed hole intended for electrolyte composition, introducing the electrolyte composition, and the case is vacuum-sealed. Pre-doping process on the anode is performed.

The electrolyte system in thusly-prepared lithium ion capacitor shows an excellent thermal stability even under high voltage operation, and therefore, attains high powder density and energy density.

## Claims

1. A hybrid capacitor, comprising at least a cathode, an anode, and an electrolyte composition, wherein the electrolyte composition comprises at least one compound comprising a fluorophosphate.

2. The hybrid capacitor according to claim 1, wherein the compound comprising a fluorophosphate is selected from the group consisting of lithium monofluorophosphate (Li₂PO₃F), lithium difluorophosphate (LiPO₂F₂) and mixture thereof, in particular LiPO₂F₂.

3. The hybrid capacitor according to claim 1 or 2, wherein the electrolyte composition comprises at least one solvent selected from the group consisting of cyclic carbonates, acyclic carbonates, and any combinations thereof.

4. The hybrid capacitor according to claim 3, wherein the electrolyte composition comprises at least one solvent selected from the group consisting of ethylene carbonate, propylene carbonate, diethyl carbonate, and any combinations thereof.

5. The hybrid capacitor according to any one of claims 1 to 4, wherein the electrolyte composition comprises at least one conducting salt selected from the group consisting of LiPF₆, LiBF₄, Li(CF₃SO₂)₂N, Li(FSO₂)₂N, LiB(C₂O₄)₂, and any combination thereof.

6. The hybrid capacitor according to any one of claims 1 to 5, wherein the electrolyte composition further comprises a fluorinated carbonate, in particular monofluoroethylene carbonate.

7. The hybrid capacitor according to any one of claims 1 to 6, being a lithium ion capacitor.

8. Use of a compound comprising a fluorophosphate as a component of an electrolyte composition for a hybrid capacitor.
